# EUROPÄISCHE PATENTSCHRIFT

(11) **EP 2 510 774 B1**
(45) Veröffentlichungstag und Bekanntmachung des Hinweises auf die Patenterteilung: **22.08.2018**
(21) Anmeldenummer: 12157412.3
(22) Anmeldetag: 29.02.2012
(51) Int. Cl.: A01D 41/127, A01D 43/073, A01D 43/08, A01D 75/18, A01D 41/12, A01B 69/00, G03B 17/55

(54) **Kamera zur Überwachung von Maschinenfunktionen eines Fahrzeuges sowie Verwendung einer Kamera**
Camera for monitoring machine functions of a vehicle and use of a camera
Caméra destinée à la surveillance de fonctions de machines d'un véhicule automobile, ainsi qu'utilisation d'une caméra

(30) Priorität: 15.04.2011 DE 102011002111
(43) Veröffentlichungstag der Anmeldung: 17.10.2012
(73) Patentinhaber: CLAAS Selbstfahrende Erntemaschinen GmbH, 33428 Harsewinkel (DE)
(72) Erfinder: Ruthenberg, Dirk, 49152 Bad Essen (DE)

(56) Entgegenhaltungen:
- EP-A1- 1 626 583
- EP-A1- 2 266 383
- EP-B1- 1 916 126
- US-A- 2 855 826

## Beschreibung

Die vorliegende Erfindung betrifft eine Kamera zur Überwachung von Maschinenfunktionen eines Fahrzeuges gemäß dem Oberbegriff des Anspruches 1. Weiterhin betrifft die Erfindung die Verwendung einer Kamera an einer selbstfahrenden landwirtschaftlichen Erntemaschine gemäß dem Oberbegriff des Anspruches 12.

Der Einsatz einer Kamera zur Überwachung von Maschinenfunktionen eines Fahrzeuges ist hinlänglich bekannt. So beschreibt die EP 1344445 A1 die Verwendung einer Kamera zur Überwachung der Ausrichtung eines Auswurfkrümmers eines selbstfahrenden Feldhäckslers bezüglich eines Begleitfahrzeuges, welches Erntegut aufnimmt. Aus der EP 1916126 B1 ist es bekannt, eine Kamera zur Unterstützung des Ankoppelvorganges zwischen einem Mähdrescher und einem Schneidwerkswagen zu verwenden, während der Mähdrescher rückwärts auf den Schneidwerkswagen zufährt. Die EP 1763988 A1 beschreibt die Verwendung einer Kamera im Kornelevator eines Mähdreschers, um die Qualität des geförderten Erntegutes beurteilen zu können. Die Information über die Qualität wird wiederum für die Einstellung von Maschinenparametern herangezogen. Die EP-A-2 266 383 beschreibt die Verwendung einer Kamera an einer selbstfahrenden landwirtschaftlichen Erntemaschine, wobei die Kamera an einer Übergabevorrichtung angeordnet ist. Bei einem Einsatz einer Kamera kommt es unter ungünstigen Witterungsbedingungen zu Einschränkungen auf Grund kondensierender Feuchtigkeit auf der Scheibe, die das Objektiv vor Umgebungseinflüssen wie Feuchtigkeit oder Verschmutzung schützt. Dies beeinträchtigt die Qualität der von der Kamera aufgenommen und auf einem Bildschirm bereitgestellten Bilder, wodurch die Überwachungsfunktion beeinträchtig wird.

Aus der gattungsbildenden EP1626583A1 ist eine Kamera zur Überwachung von Maschinenfunktionen eines Fahrzeuges bekannt. Die Kamera umfasst ein Gehäuse, in welchem ein Objektiv sowie eine vor dem Objektiv angeordnete Scheibe angeordnet sind. In dem Gehäuse ist zu der Scheibe benachbart ein Heizelement angeordnet, um die Kondensation von Feuchtigkeit auf der Scheibe zu verhindern.

Aufgabe der vorliegenden Erfindung ist es, eine Kamera der eingangs genannten Art bereitzustellen, die den genannten Nachteil nicht aufweist.

Erfindungsgemäß wird diese Aufgabe durch die kennzeichnenden Merkmale der Ansprüche 1 und 12 gelöst.

Vorteilhafte Weiterbildungen der Erfindung sind Gegenstand der Unteransprüche.

Gemäß dem Anspruch 1 wird eine Kamera zur Überwachung von Maschinenfunktionen vorgeschlagen, welche am oder im Fahrzeug angeordnet ist, wobei die Kamera ein Gehäuse umfasst, in dem ein Objektiv sowie eine vor dem Objektiv angeordnete erste Scheibe, die das Objektiv vor Umgebungseinflüssen schützt, in dem das Gehäuse durch einen Rahmen sowie die darin gehalterte erste Scheibe dichtend verschlossen ist, wobei in dem Gehäuse wenigstens ein Heizelement zu der ersten Scheibe benachbart angeordnet ist, gekennzeichnet durch eine zweite Scheibe auf der dem Objektiv abgewandten Seite der ersten Scheibe beabstandet zu dieser lösbar am Gehäuse angeordnet ist und dass der Wärmeübergang über einen Abschnitt des Rahmens erfolgt an dem auch die zweite Scheibe abschnittsweise anliegt. Durch das wenigstens eine Heizelement kann das Kondensieren von Feuchtigkeit auf Grund eines Temperaturgefälles gegenüber der Umgebung an der ersten Scheibe vermieden werden.

Die Verwendung einer zweiten Scheibe dient dem Schutz der dahinterliegenden Glasscheibe, die den das Objektiv umgebenden Raum des Gehäuses gegenüber der Umgebung dichtend verschließt, um das Eindringen von Feuchtigkeit oder Luft zu verhindern. Der Einsatz einer derartigen Kamera unter Bedingungen, die zu einer starken Verschmutzung bis hin zum Oberflächenverschleiß der ersten Scheibe auf Grund der abrasiven Wirkung des Erntegutes aber auch bei der manuellen Reinigung der ersten Scheibe führen würden, hätte bei der Verwendung konventioneller Kameras zur Folge, dass diese vollständig ausgetauscht werden müssten. Durch die Verwendung der zweiten Scheibe wird erreicht, dass Verschmutzungen auf der zweiten Scheibe manuell beseitigt werden können und dass im Bedarfsfall die zweite Scheibe ausgetauscht werden kann, wenn der Verschleiß der Oberfläche durch das Reinigen oder die abrasive Wirkung des Erntegutes zu groß geworden ist.

Hierzu kann die zweite Scheibe in einem Wechselrahmen gehaltert sein. Der Wechselrahmen ermöglicht eine einfache Montage und Demontage der zweiten Scheibe zu Zwecken der Reinigung wie auch des Austausches.

Vorteilhafterweise kann die zweite Scheibe als ein Filter ausgeführt sein. Hierzu kann die zweite Scheibe in Abhängigkeit von den Lichtverhältnissen durch eine Scheibe ersetzt werden, die eine an die herrschenden Lichtverhältnisse angepasste Tönung aufweist. Ebenfalls denkbar wäre der Einsatz einer selbsttönenden Scheibe, die in Abhängigkeit von den Lichtverhältnissen den Grad der Lichtdurchlässigkeit automatisch verändert.

In bevorzugter Weiterbildung der Erfindung kann vorgesehen sein, dass an einem die erste Scheibe halternden Rahmen und/oder dem Wechselrahmen zumindest eine Austrittsöffnungen angebracht ist, durch die auf die Oberfläche zumindest einer der beiden Scheiben ein Fluid gerichtet ausbringbar ist. Die zumindest eine Austrittsöffnung ist derart an dem Rahmen beziehungsweise dem Wechselrahmen angeordnet, dass ein gerichteter Fluidstrom über die Oberfläche zumindest einer der beiden Scheiben ausgebracht wird. Durch das die Oberfläche überströmende Fluid können sich auf der ersten beziehungsweise zweiten Scheibe ansammelnde Verschmutzungen zumindest teilweise beseitigt werden. Als Fluid kann vorzugsweise Wasser oder Druckluft zum Einsatz kommen.

Insbesondere kann durch die zumindest eine Austrittsöffnung ein kontinuierlicher Fluidstrom ausbringbar sein. Die Ausbringung eines kontinuierlichen Fluidstromes bildet eine Art Vorhang vor der ersten beziehungsweise zweiten Scheibe aufgebaut werden, durch den eine Ablagerung von kleinen Erntegutpartikeln wie Staub auf der Oberfläche weitgehend verhindert werden kann. Dabei ist die Verwendung von Druckluft als Fluid die günstigere Variante.

Vorteilhafterweise kann der Wechselrahmen kraft- und/oder formschlüssig mit dem Gehäuse verbindbar und von diesem zerstörungsfrei lösbar sein. Dabei hat sich eine Schraubverbindung als besonders vorteilhaft erwiesen. Denkbar sind jedoch auch Clipsverbindungen.

Insbesondere kann das wenigstens eine Heizelement elektrisch betreibbar sein. Dies stellt eine kostengünstige und platzsparende Variante dar.

Hierzu kann das wenigstens eine Heizelement einen oder mehrere Widerstände aufweisen. Dabei können der oder die Widerstände auf einem an den Querschnitt des Gehäuses angepassten, im Wesentlichen ringförmigen Einbaubauteil angeordnet sein, welches im Inneren des Gehäuses im Bereich der ersten Scheibe angeordnet werden kann. Das Einbaubauteil kann einteilig oder mehrteilig ausgeführt sein, entsprechend der Komplexität des Aufbaus im Inneren des Gehäuses der Kamera.

Vorzugsweise kann die Temperatur des wenigstens einen Heizelementes steuer- oder regelbar sein. Hierdurch ließe sich innerhalb eines vorgebbaren Temperaturbereiches, in dem das wenigstens eine Heizelement betrieben werden soll, auf Temperaturänderungen der Umgebung reagieren.

Um eine ausreichende Wärmeleitung zwischen dem wenigstens einen Heizelement und der ersten Scheibe zu erreichen, kann ein die erste Scheibe aufnehmender Rahmen zumindest abschnittsweise aus einem Metall bestehen, der mit dem wenigstens einen Heizelement in Verbindung steht.

Vorteilhafterweise kann der Rahmen, der die erste Scheibe aufnimmt, mit der zweiten Scheibe in Verbindung stehen. Dadurch wird eine Übertragung der Wärme auch auf die zweite Scheibe sowie den Raum zwischen der ersten und der zweiten Scheibe erreicht, wodurch ein Kondensieren von Feuchtigkeit zwischen der ersten und zweiten Scheibe sowie auf der Außenseite der zweiten Scheibe vermieden werden kann.

Weiterhin betrifft die vorliegende Erfindung die Verwendung einer Kamera zur Überwachung von Maschinenfunktionen an einer selbstfahrenden landwirtschaftlichen Erntemaschine, die eine Übergabevorrichtung zur Abgabe von Erntegut an ein Begleitfahrzeug aufweist, die zwischen einer Übergabeposition und einer Straßenfahrtposition verschwenkt wird, wobei die Kamera (1) ein
Gehäuse (2) umfasst, in dem ein Objektiv (3) sowie eine vor dem Objektiv (3) angeordnete erste Scheibe (4), die das Objektiv (3) vor Umgebungseinflüssen schützt, angeordnet sind, wobei in dem Gehäuse (2) wenigstens ein Heizelement (10) zu der ersten Scheibe (4) benachbart angeordnet ist.

Gemäß dem Anspruch 12 wird vorgeschlagen, dass die Kamera an der Übergabevorrichtung angeordnet ist, wobei in Abhängigkeit von der Position der Übergabevorrichtung die Kamera Bilder von der Abgabe des Erntegutes oder vom rückwärtigen Bereich der Erntemaschine an eine Bildschirmeinheit übermittelt werden.

In vorteilhafter Weiterbildung ist vorgesehen, dass in der Straßenfahrtposition der Übergabevorrichtung von der Kamera fahrtrichtungsabhängig Bilder des rückwärtigen Bereiches der Erntemaschine an die Bildschirmeinheit übermittelt werden. Hierbei kann bei einem Einlegen des Rückwärtsganges die Kamera aktiviert werden, um dem Fahrer Bilder des rückwärtigen Bereiches bereitzustellen, um das Rückwärtsfahren sicher zu gestalten und zu erleichtern.

Des Weiteren kann in der Straßenfahrtposition der Übergabevorrichtung bei einem Fahrtrichtungswechsel von Rückwärtsfahrt in Vorwärtsfahrt eine zeitliche Verzögerung bei der Abschaltung der Kamera vorgesehen sein. Die zeitliche Verzögerung des Abschaltens der Kamera dient dazu, für eine Übergangsphase beim Wechsel von der Rückwärtsfahrt in die Vorwärtsfahrt dem Fahrer Bilder des rückwärtigen Bereiches der Erntemaschine bereitzustellen, um dem Fahrer während dieser Übergangsphase etwaige im rückwärtigen Bereich plötzlich auftretende Hindernisse anzuzeigen.

Des Weiteren kann in der Straßenfahrtposition der Übergabevorrichtung bei einem Fahrtrichtungswechsel von Rückwärtsfahrt in Vorwärtsfahrt eine zeitliche Verzögerung bei der Abschaltung der Kamera vorgesehen sein. Die zeitliche Verzögerung des Abschaltens der Kamera dient dazu, für eine Übergangsphase beim Wechsel von der Rückwärtsfahrt in die Vorwärtsfahrt dem Fahrer Bilder des rückwärtigen Bereiches der Erntemaschine bereitzustellen, um dem Fahrer während dieser Übergangsphase etwaige im rückwärtigen Bereich plötzlich auftretende Hindernisse anzuzeigen.

Die vorliegende Erfindung wird nachfolgend anhand eines in den Zeichnungen dargestellten Ausführungsbeispieles näher beschrieben.
Es zeigen:
- Fig. 1: eine perspektivische Ansicht einer Kamera;
- Fig. 2: eine schematisierte Teilschnittansicht eines Gehäuses der Kamera gemäß Fig. 1;
- Fig. 3: eine perspektivische Ansicht eines Feldhäckslers von hinten;
- Fig. 4: eine schematische Seitenansicht eines Mähdreschers.

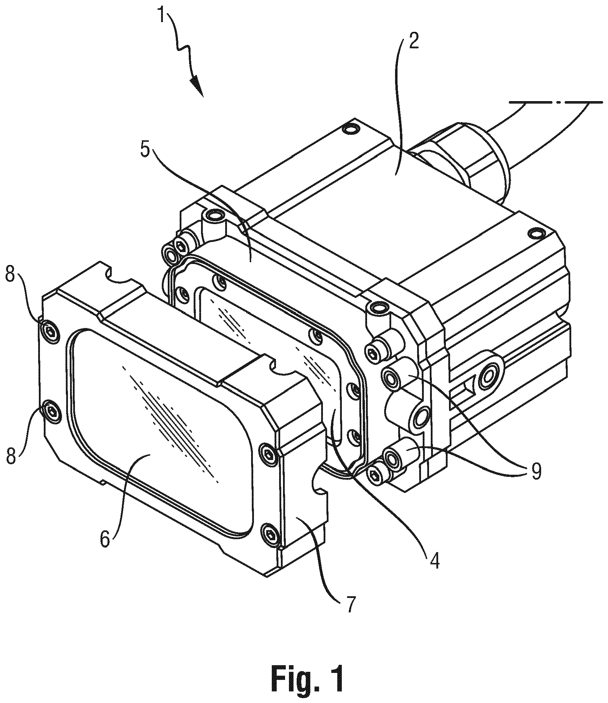

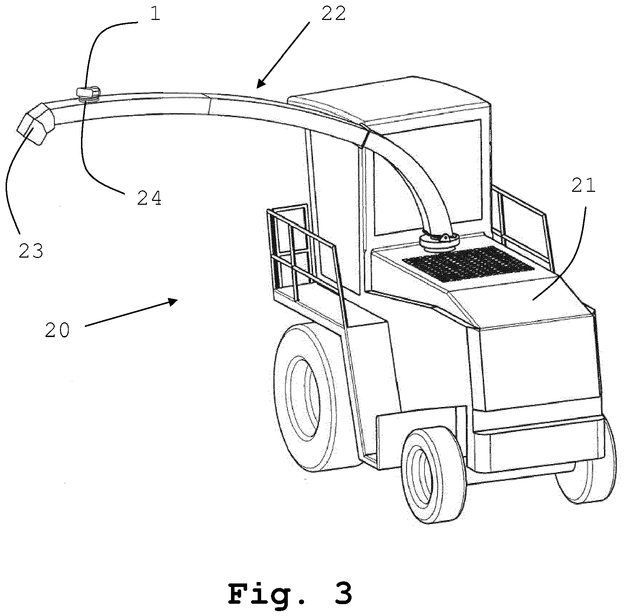

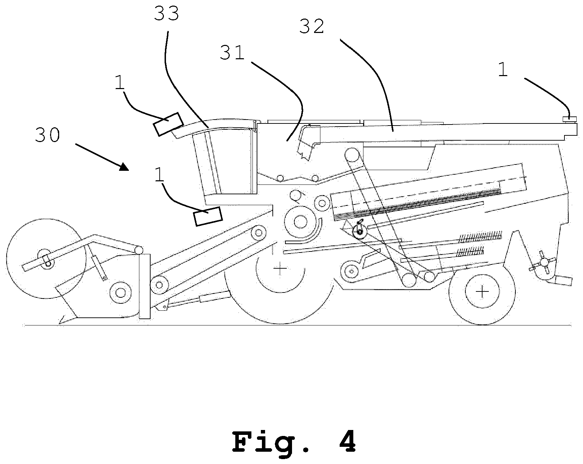

Die Darstellung in Fig. 1 zeigt eine perspektivische Ansicht einer Kamera 1, wie sie zur Überwachung von Maschinenfunktionen eines Fahrzeuges zum Einsatz kommen kann. Hierzu ist die Kamera 1 entsprechend der zu Überwachenden Maschinenfunktion an oder in dem Fahrzeug angeordnet, was beispielhaft gemäß den Fig. 3 und 4, die einen Feldhäcksler beziehungsweise einen Mähdrescher zeigen, erläutert wird. Die Kamera 1 umfasst ein Gehäuse 2, welches auf einer Seite durch einen Rahmen 5 sowie eine darin gehalterte erste Scheibe 4 dichtend verschlossen ist. Weiterhin zeigt die Darstellung gemäß Fig. 1 einen Wechselrahmen 7, in dem eine zweite Scheibe 6 angeordnet ist, in einer von dem Gehäuse 2 der Kamera 1 gelösten Position. Der Wechselrahmen 7 ist durch Schraubverbindungen mit dem Gehäuse 2 verbindbar, wie durch die Schrauben 8 und die Gewindebohrungen 9 angedeutet wird.

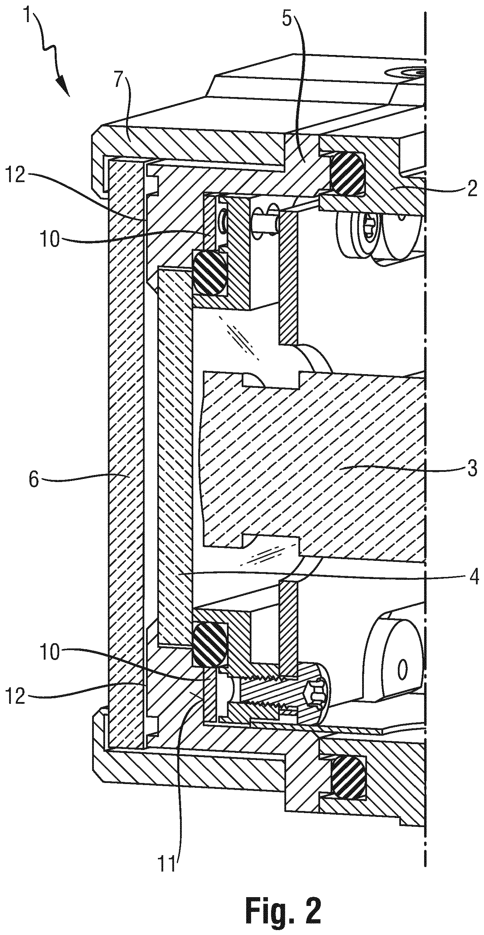

Die Darstellung in Fig. 2 zeigt eine schematisierte Schnittansicht des Gehäuses 2 der Kamera 1 gemäß Fig. 1. In dem Gehäuse 2 sind ein Objektiv 3 sowie eine zugehörige, nicht dargestellte Elektronik angeordnet. Das Gehäuse 2 ist, wie bereits ausgeführt, durch eine in einem Rahmen 5 nicht lösbar gehalterte erste Scheibe 4 verschlossen, um das Eindringen von Staub oder Feuchtigkeit in das Gehäuse 2 zu verhindern. Der die erste Scheibe 4 umgebende Rahmen 5 ist zumindest abschnittsweise aus einem Material hergestellt, welches sich durch eine gute Wärmeleitfähigkeit auszeichnet. Insbesondere der die erste Scheibe 4 unmittelbar umgebende Abschnitt 12 des Rahmens 5 besteht aus einem solchen Material.

Benachbart zu der ersten Scheibe 4 ist die zweite Scheibe 6 in dem Wechselrahmen 7 angeordnet. Der Wechselrahmen 7 ist durch eine kraft- und/oder formschlüssige Verbindung mit dem Gehäuse 2 lösbar verbunden.

Im Inneren des Gehäuses 2 ist wenigstens ein Heizelement 10 zu der ersten Scheibe 4 benachbart angeordnet. Das Heizelement 10 ist elektrisch betreibbar und weist einen oder mehrere Widerstände auf, um die für das Erwärmen erforderliche Verlustwärme zu erzeugen. Die Temperatur des wenigstens einen Heizelementes 10 kann steuer- oder regelbar sein, um auf sich ändernde Umgebungsbedingungen reagieren zu können. Ein Außentemperaturfühler könnte hierfür einen Vergleichswert liefern, der der Einstellung des wenigstens einen Heizelementes 10 zu Grunde gelegt wird. Der die erste Scheibe 4 aufnehmende Rahmen 5, der mit dem wenigstens einen Heizelement 10 in Verbindung steht, besteht zumindest in seinem Kontaktbereich 11 mit dem Heizelement 10 vorzugsweise aus einem Metall, um eine möglichst effiziente Wärmeübertragung zwischen dem Rahmen 5 und dem Heizelement 10 zu erreichen.

Wie in Fig. 2 dargestellt, erfolgt die Anordnung der zweiten Scheibe 6 benachbart zu der ersten Scheibe 4, wobei sich zwischen diesen ein geringfügiger Luftspalt ausbildet. Um eine verlustarme Wärmeübertragung von dem wenigstens einen Heizelement 10 auch auf die zweite Scheibe 6 zu erreichen, erfolgt der Wärmeübergang vorzugsweise über den Abschnitt 12 des Rahmens 5 der ersten Scheibe 4, an dem auch die zweite Scheibe 6 abschnittsweise anliegt. Entsprechend besteht zumindest dieser Abschnitt aus einem Material mit guter Wärmeleitfähigkeit.

Fig. 3 zeigt eine schematische Darstellung eines Feldhäckslers 20 in perspektivischer Ansicht von hinten. Die vom Betrachter abgewandte Vorderseite des Feldhäckslers 20 weist ein an sich bekanntes Einzugsgehäuse auf, an der unterschiedliche Typen von Vorsatzgeräten austauschbar montiert werden können, die sich in der Art des Erntegutes, an das sie angepasst sind, und/oder in ihrer Arbeitsbreite unterscheiden. Das Vorsatzgerät führt das Erntegut einem Häckselwerk im Innern der Karosserie 21 des Feldhäckslers 20 zu. An der Oberseite der Karosserie 21 ist ein Auswurfkrümmer 22 um eine vertikale Achse drehbar montiert und in einer Entladeposition dargestellt. Der Auswurfkrümmer 22 dient zum Überladen des gehäckselten Erntegutes in ein parallel zum Feldhäcksler 20 fahrendes Begleitfahrzeug. Der proximale Abschnitt des Auswurfkrümmers 22 ist drehbar mit der Karosserie 21 verbunden, der distale Abschnitt des Auswurfkrümmers 22 trägt an seinem karosseriefernen Ende eine Auswurfklappe 23. An dem distalen Abschnitt des Auswurfkrümmers 22 ist benachbart zur Auswurfklappe 23 die Kamera 1 montiert. Die Kamera 1 ist mit dem distalen Abschnitt über ein Drehgelenk 24 mit vertikaler Drehachse verbunden. Ein an dem Drehgelenk 24 angebrachter Motor ist an einen Drehantrieb des Auswurfkrümmers 22 gekoppelt. Die Kamera 1 dient beispielsweise der Funktionsüberwachung während des Entladevorganges auf das Begleitfahrzeug.

Für eine Straßenfahrt wird der Auswurfkrümmer 22 in eine Straßenfahrtposition überführt, das heißt, dass sich der Auswurfkrümmer 22 in einer zur Längsachse des Feldhäckslers 20 parallelen Position befindet. In dieser Straßenfahrtposition liefert die Kamera 1 am Auswurfkrümmer Bilder vom rückwärtigen Bereich des Feldhäckslers 20 an eine Bildschirmeinheit im Inneren der Fahrerkabine.

Fig. 4 zeigt eine schematische Seitenansicht eines Mähdreschers 30. Der Mähdrescher 30 weist in seinem Frontbereich ein Schneidwerk auf, welches dem Ernten und Aufnehmen von Erntegut sowie der Übergabe an den Mähdrescher 30 zur weiteren Verarbeitung dient. Das Erntegut wird in dem Mähdrescher 30 verarbeitet, wobei aus dem aufgenommenen Erntegut ausgeschiedenes Korn in einen Korntank 31 gefördert wird. Das in dem Korntank 31 gebunkerte Korn wird bei Erreichen der maximalen Aufnahmekapazität über ein Kornabtankrohr 32 auf ein Begleitfahrzeug überladen. Zur Überwachung des Überladevorganges ist am Kornabtankrohr 32 die erfindungsgemäße Kamera 1 angeordnet, die hier unter schwierigen Bedingungen zum Einsatz kommt.

Insbesondere feine Staubpartikel können sich auf der Oberfläche der ersten Scheibe 4 beziehungsweise der zweiten Scheibe 6 absetzen und führen dazu, dass die Bildqualität der von der Kamera 1 zu Überwachungszwecken aufgenommenen Bilder stark beeinträchtigt wird. Verstärkt wird diese Beeinträchtigung durch auf der Oberfläche der ersten Scheibe 4 beziehungsweise der zweiten Scheibe 6 kondensierende Feuchtigkeit. Durch die Verwendung der Kamera 1 mit in dem Gehäuse2 angeordneten wenigstens einen Heizelement 10 lässt sich die Bildqualität über einen längeren Zeitraum ohne manuelle Reinigung aufrecht erhalten. Da, wie weiter oben bereits ausgeführt wurde, das manuelle Reinigen längerfristig zu Beschädigungen der Oberfläche der ersten Scheibe 4 führen würde, indem diese matt wird, ist der Einsatz einer zweiten Scheibe 6, die zu Reinigungszwecken einfach vom Gehäuse 2 lösbar ist und bei Bedarf vollständig austauschbar ist, sinnvoll. In Fig. 4 sind weitere Positionen einer möglichen Anordnung der Kamera 1 an der Außenseite der Erntemaschine dargestellt, die der Überwachung von Maschinenfunktionen dienen. Eine am Dach der Kabinen 33 angeordnete Kamera 1 könnte in den zu erntenden Bestand blicken, um Informationen über die aufzunehmende Erntegutmenge bereitzustellen. Eine Kamera 1, die wie angedeutet unterhalb der Kabine 33 angeordnet ist und in die Schneidwerksmulde blickt, könnte Daten über die Verteilung des vom Schneidwerk aufgenommenen Erntegutes bereitstellen und auf einer Bildschirmeinheit in der Kabine 33 zur Anzeige bringen. Die Verwendung der Kamera 1 im Inneren des Mähdreschers käme beispielsweise im Motorraum oder bei der Abgabe von Stroh an eine Häckseleinrichtung in Betracht.

Die an dem Kornabtankrohr 32 angeordnete Kamera 1 wird entsprechend in Abhängigkeit von der Position des Kornabtankrohres 32 entweder als Rückfahrtkamera oder zur Überwachung des Abtankvorganges eingesetzt, wobei in Abhängigkeit von der Position des Kornabtankrohres 32 die Kamera 1 Bilder von der Abgabe des Erntegutes an das Begleitfahrzeug oder vom rückwärtigen Bereich des Mähdreschers 30 an eine Bildschirmeinheit in der Kabine 33 übermittelt werden. Die Bildübertragung kann bei einem Wechsel von der Rückwärtsfahrt in Vorwärtsfahrt zeitverzögert aufrecht erhalten werden, um während der ersten Zeit nach der Fahrtrichtungsänderung weiterhin Bilder des Rückwärtigen Bereiches der Erntemaschine bereitzustellen.

**Bezugszeichenliste**

| | | | |
|---|---|---|---|
| **1** | Kamera | **20** | Feldhäcksler |
| **2** | Gehäuse | **21** | Karosserie |
| **3** | Objektiv | **22** | Auswurfkrümmer |
| **4** | Erste Scheibe | **23** | Auswurfklappe |
| **5** | Rahmen | **24** | Drehgelenk |
| **6** | Zweite Scheibe | | |
| **7** | Wechselrahmen | **30** | Mähdrescher |
| **8** | Schraube | **31** | Korntank |
| **9** | Gewindebohrung | **32** | Kornabtankrohr |
| **10** | Heizelement | **33** | Kabine |
| **11** | Kontaktfläche | | |
| **12** | Abschnitt | | |

## Patentansprüche

1. Kamera (1) zur Überwachung von Maschinenfunktionen eines Fahrzeuges (20, 30), welche am oder im Fahrzeug (20, 30) angeordnet ist, wobei die Kamera (1) ein Gehäuse (2) umfasst, in dem ein Objektiv (3) sowie eine vor dem Objektiv (3) angeordnete erste Scheibe (4), die das Objektiv (3) vor Umgebungseinflüssen schützt, angeordnet sind, wobei in dem Gehäuse (2) wenigstens ein Heizelement (10) zu der ersten Scheibe (4) benachbart angeordnet ist,
**dadurch gekennzeichnet,**
**dass** das Gehäuse (2) durch einen Rahmen (5) sowie die darin gehalterte erste Scheibe (4) dichtend verschlossen ist, dass eine zweite Scheibe (6) auf der dem Objektiv (3) abgewandten Seite der ersten Scheibe (4) beabstandet zu dieser lösbar am Gehäuse (2) angeordnet ist und dass ein Wärmeübergang über einen Abschnitt (12) des Rahmens (5) erfolgt, an dem auch die zweite Scheibe (6) abschnittsweise anliegt.

2. Kamera (1) nach Anspruch 1, **dadurch gekennzeichnet, dass** die zweite Scheibe (6) in einem Wechselrahmen (7) gehaltert ist.

3. Kamera (1) nach einem der Ansprüche 1 oder 2, **dadurch gekennzeichnet, dass** die zweite Scheibe (6) als ein Filter ausgeführt ist.

4. Kamera (1) nach einem der Ansprüche 1 bis 3, **dadurch gekennzeichnet, dass** an dem die erste Scheibe (4) halternden Rahmen (5) und/oder dem Wechselrahmen (7) zumindest eine Austrittsöffnung vorgesehen ist, durch die ein Fluid auf die Oberfläche zumindest einer der beiden Scheiben (4, 6) gerichtet ausbringbar ist.

5. Kamera (1) nach Anspruch, 4 **dadurch gekennzeichnet, dass** durch die zumindest eine Austrittsöffnung ein kontinuierlicher Fluidstrom ausbringbar ist.

6. Kamera (1) nach einem der Ansprüche 2 bis 5, **dadurch gekennzeichnet, dass** der Wechselrahmen (7) kraft- und/oder formschlüssig mit dem Gehäuse (2) verbindbar und von diesem zerstörungsfrei lösbar ist.

7. Kamera (1) nach einem der Ansprüche 1 bis 6, **dadurch gekennzeichnet, dass** das wenigstens eine Heizelement (10) elektrisch betreibbar ist.

8. Kamera (1) nach einem der Ansprüche 1 bis 7, **dadurch gekennzeichnet, dass** das wenigstens eine Heizelement (10) einen oder mehrere Widerstände aufweist.

9. Kamera (1) nach einem der Ansprüche 1 bis 8, **dadurch gekennzeichnet, dass** die Temperatur des wenigstens einen Heizelementes (10) steuer- oder regelbar ist.

10. Kamera (1) nach einem der Ansprüche 1 bis 9, **dadurch gekennzeichnet, dass** der die erste Scheibe (4) aufnehmende Rahmen (5), der mit dem wenigstens einen Heizelement (10) in Verbindung steht, aus einem Metall besteht.

11. Kamera nach Anspruch 10, **dadurch gekennzeichnet, dass** der Rahmen (5) mit der zweiten Scheibe (6) in Verbindung steht.

12. Verwendung einer Kamera (1) zur Überwachung von Maschinenfunktionen an einer selbstfahrenden landwirtschaftlichen Erntemaschine (20, 30), die eine Übergabevorrichtung (22, 32) zur Abgabe von Erntegut an ein Begleitfahrzeug aufweist, die zwischen einer Übergabeposition und einer Straßenfahrtposition verschwenkt wird, wobei die Kamera (1) ein Gehäuse (2) umfasst, in dem ein Objektiv (3) sowie eine vor dem Objektiv (3) angeordnete erste Scheibe (4), die das Objektiv (3) vor Umgebungseinflüssen schützt, angeordnet sind, wobei in dem Gehäuse (2) wenigstens ein Heizelement (10) zu der ersten Scheibe (4) benachbart angeordnet ist,
**dadurch gekennzeichnet,**
**dass** die Kamera (1) an der Übergabevorrichtung (22, 32) angeordnet ist, wobei in Abhängigkeit von der Position der Übergabevorrichtung (22, 32) die Kamera (1) Bilder von der Abgabe des Erntegutes oder vom rückwärtigen Bereich der Erntemaschine (20, 30) an eine Bildschirmeinheit übermittelt werden.

13. Verwendung nach Anspruch 12, **dadurch gekennzeichnet, dass** in der Straßenfahrtposition der Übergabevorrichtung von der Kamera (1) fahrtrichtungsabhängig Bilder des rückwärtigen Bereiches der Erntemaschine (20, 30) an die Bildschirmeinheit übermittelt werden.

14. Verwendung nach Anspruch 13, **dadurch gekennzeichnet, dass** in der Straßenfahrtposition der Übergabevorrichtung bei einem Fahrtrichtungswechsel von Rückwärtsfahrt in Vorwärtsfahrt eine zeitliche Verzögerung bei der Abschaltung der Kamera (1) vorgesehen ist.

## Claims

1. A camera (1) for monitoring machine functions of a vehicle (20, 30), which is arranged on or in the vehicle (20, 30), wherein the camera (1) includes a housing (2) in which are arranged an objective lens (3) and a first pane (4) which is arranged in front of the objective lens (3) and protects the objective lens (3) from environmental influences, wherein at least one heating element (10) is arranged in the housing (2) in adjacent relationship with the first pane (4),
**characterised in that**
the housing (2) is sealingly closed by a frame (5) and the first pane (4) held therein, that a second pane (6) is arranged releasably on the housing (2) on the side of the first pane (4) that is remote from the objective lens (3) in adjacent relationship with said pane, and that heat transfer is effected by way of a portion (12) of the frame (5), against which the second pane (6) also bears portion-wise.

2. A camera (1) according to claim 1 **characterised in that** the second pane (6) is held in an interchangeable frame (7).

3. A camera (1) according to one of claims 1 and 2 **characterised in that** the second pane (6) is in the form of a filter.

4. A camera (1) according to one of claims 1 to 3 **characterised in that** provided on the frame (5) holding the first pane (4) and/or the interchangeable frame (7) is at least one outlet opening through which a fluid can be applied directed on to the surface of at least one of the two panes (4, 6).

5. A camera (1) according to claim 4 **characterised in that** a continuous flow of fluid can be discharged through the at least one outlet opening.

6. A camera (1) according to one of claims 2 to 5 **characterised in that** the interchangeable frame (7) can be connected to the housing (2) in force-locking and/or positively locking relationship and can be released therefrom without being destroyed.

7. A camera (1) according to one of claims 1 to 6 **characterised in that** the at least one heating element (10) is electrically operable.

8. A camera (1) according to one of claims 1 to 7 **characterised in that** the at least one heating element (10) has one or more resistors.

9. A camera (1) according to one of claims 1 to 8 **characterised in that** the temperature of the at least one heating element can be open-loop or closed-loop controlled.

10. A camera (1) according to one of claims 1 to 9 **characterised in that** the frame (5) which accommodates the first pane (4) and is connected to the at least one heating element (10) comprises a metal.

11. A camera according to claim 10 **characterised in that** the frame (5) is connected to the second pane (6).

12. Use of a camera (1) for monitoring machine functions on a self-propelled agricultural harvester (20, 30) which has a transfer device (22, 32) for discharging crop material to an accompanying vehicle, which transfer device is pivoted between a transfer position and an on-road travel position, wherein the camera (1) includes a housing (2) in which an objective lens (3) and a first pane (4) which is arranged in front of the objective (3) and which protects the objective lens (3) from environmental influences are arranged, wherein at least one heating element (10) is arranged in the housing (2) in adjacent relationship with the first pane (4),
**characterised in that**
the camera (1) is arranged at the transfer device (22, 23), wherein in dependence on the position of the transfer device (22, 23) the camera (1) transmits images of the discharge of the crop material or the rearward region of the harvester (20, 30) to a display screen unit.

13. Use according to claim 12 **characterised in that** in the on-road travel position of the transfer device images dependent on the direction of travel of the rearward region of the harvester (20, 30) are communicated by the camera (1) to the display screen unit.

14. Use according to claim 13 **characterised in that** in the on-road travel position of the transfer device there is a time delay in switching off the camera (1) upon a change in the direction of travel from reverse travel to forward travel.

## Revendications

1. Caméra (1) pour la surveillance de fonctions mécaniques d'un véhicule (20, 30), laquelle est montée sur ou dans le véhicule (20, 30), la caméra (1) comportant un boîtier (2) dans lequel sont disposés un objectif (3) ainsi qu'une première vitre (4) qui est disposée devant l'objectif (3) et qui protège l'objectif (3) des influences environnementales, dans le boîtier (2) étant disposé au moins un élément de chauffage (10) au voisinage de la première vitre (4), **caractérisée en ce que** le boîtier (2) est fermé de manière étanche par l'intermédiaire d'un châssis (5) ainsi que de la première vitre (4) maintenue à l'intérieur, **en ce qu'**une seconde vitre (6) est disposée de manière amovible sur le boîtier (2) sur le côté de la première vitre (4) situé à l'opposé de l'objectif (3), à distance de celle-ci, et **en ce qu'**un transfert de chaleur s'effectue par l'intermédiaire d'une portion (12) du châssis (5) contre laquelle la seconde vitre (6) prend également appui par endroits.

2. Caméra (1) selon la revendication 1, **caractérisée en ce que** la seconde vitre (6) est maintenue dans un châssis interchangeable (7).

3. Caméra (1) selon une des revendications 1 ou 2, **caractérisée en ce que** la seconde vitre (6) est conformée en filtre.

4. Caméra (1) selon une des revendications 1 à 3, **caractérisée en ce que** dans le châssis (5) maintenant la première vitre (4) et/ou dans le châssis interchangeable (7) est ménagée au moins une ouverture de sortie à travers laquelle un fluide peut sortir en direction de la surface d'au moins une des deux vitres (4, 6).

5. Caméra (1) selon la revendication 4, **caractérisée en ce qu'**un courant de fluide continu peut sortir à travers la au moins une ouverture de sortie.

6. Caméra (1) selon une des revendications 2 à 5, **caractérisée en ce que** le châssis interchangeable peut être relié au boîtier (2) par conjugaison de forces et/ou de formes et peut en être retiré sans dommage.

7. Caméra (1) selon une des revendications 1 à 6, **caractérisée en ce que** le au moins un élément de chauffage (10) peut fonctionner électriquement.

8. Caméra (1) selon une des revendications 1 à 7, **caractérisée en ce que** le au moins un élément de chauffage (10) comporte une ou plusieurs résistances.

9. Caméra (1) selon une des revendications 1 à 8, **caractérisée en ce que** la température du au moins un élément de chauffage (10) peut être commandée ou régulée.

10. Caméra (1) selon une des revendications 1 à 9, **caractérisée en ce que** le châssis (5), qui reçoit la première vitre (4) et qui est relié au au moins un élément de chauffage (10), est réalisé dans un métal.

11. Caméra selon la revendication 10, **caractérisée en ce que** le châssis (5) est relié à la seconde vitre (6).

12. Utilisation d'une caméra (1) pour surveiller des fonctions mécaniques sur une machine agricole de récolte automotrice (20, 30) qui comporte un dispositif de transfert (22, 32) pour décharger du produit récolté vers un véhicule accompagnateur, lequel dispositif de transfert peut pivoter entre une position de transfert et une position de déplacement sur route, la caméra (1) comportant un boîtier (2) dans lequel sont disposés un objectif (3) ainsi qu'une première vitre (4) qui est disposée devant l'objectif (3) et qui protège l'objectif (3) des influences environnementales, dans le boîtier (2) étant disposé au moins un élément de chauffage (10) au voisinage de la première vitre (4), **caractérisée en ce que** la caméra (1) est disposée sur le dispositif de transfert (22, 32), en fonction de la position du dispositif de transfert (22,32) la caméra (1) transmettant à une unité d'écran des images du déchargement du produit récolté ou de la zone arrière de la machine de récolte (20, 30) .

13. Utilisation selon la revendication 12, **caractérisée en ce que**, dans la position de déplacement sur route du dispositif de transfert, des images de la zone arrière de la machine de récolte (20, 30) correspondant au sens de la marche sont transmises par la caméra (1) à l'unité d'écran.

14. Utilisation selon la revendication 13, **caractérisée en ce que** dans la position de déplacement sur route du dispositif de transfert, en cas d'inversion du sens de marche de la marche arrière à la marche avant, une temporisation est prévue lors de la mise à l'arrêt de la caméra (1).
